# EUROPEAN PATENT APPLICATION

(11) **EP 4 847 673 A1**
(43) Date of publication of application: **02.12.2026**
(21) Application number: 24920119.5
(22) Date of filing: 25.11.2024
(51) Int. Cl.: D02G 3/04, B29B 11/16

(54) **COMBINED FILAMENT YARN, WOVEN FABRIC, AND METHOD FOR PRODUCING SHAPED ARTICLE**

(30) Priority: 22.01.2024 JP 2024007469
(71) Applicant: MITSUBISHI GAS CHEMICAL COMPANY, INC., Chiyoda-ku Tokyo 100-8324 (JP)
(72) Inventor: ITO, Keisuke, Hiratsuka-shi, Kanagawa 254-0016 (JP)
(74) Representative: Vossius & Partner Patentanwälte Rechtsanwälte mbB
(86) International application number: PCT/JP2024/041569
(87) International publication number: WO 2025/158762

(57) **Abstract**

Provided are a commingled yarn, a woven fabric, and a method for producing a formed article. A commingled yarn containing a continuous thermoplastic resin fiber and a continuous reinforcing fiber, wherein the continuous thermoplastic resin fiber contains a polyamide resin, the polyamide resin includes a diamine unit and a dicarboxylic acid unit, 70 mol% or higher of the diamine unit is derived from xylylenediamine, and 70 mol% or higher of the dicarboxylic acid unit is derived from an α,ω-linear aliphatic dicarboxylic acid having from 11 to 20 carbon atoms.

## Description

### Technical Field

The present invention relates to a commingled yarn, a woven fabric, and a method for producing a formed article. In particular, the present invention relates to a commingled yarn in which a specific polyamide resin is used.

### Background Art

Commingled yarn produced by using a thermoplastic resin fiber and a continuous reinforcing fiber has been investigated. Commingled yarn is, for its advantageous supple characteristics, suitably used in formed articles of intricate shapes, and in formed articles particularly requiring strength.

A known application example of commingled yarn is a commingled yarn whose fiber component is composed of a continuous thermoplastic resin fiber and a continuous reinforcing fiber. Further, stitching (embroidery) using such a commingled yarn has also been investigated (Patent Documents 1 and 2). Such stitching is referred to as tailored fiber placement (TFP).

### Citation List

### Patent Document

Patent Document 1: WO 2016/159340
Patent Document 2: JP 2020-063342 A

### Summary of Invention

### Technical Problem

Here, Patent Document 1 investigates performing TFP processing using a commingled yarn containing a continuous thermoplastic resin fiber using a polyamide resin composed of sebacic acid and xylylenediamine, and a continuous carbon fiber.

The commingled yarn is an excellent material, but in recent years, a commingled yarn that can be subjected to more precise TFP processing has been required. That is, in a component requiring aesthetic design, a flexible commingled yarn adaptable to a more intricate shape is required.

An object of the present invention is to solve such issues and to provide a commingled yarn excellent in flexibility, a woven fabric, and a method for producing a formed article.

### Solution to Problem

The present inventors conducted an examination on the basis of the above issues, and as a result, found that the issues can be solved by using a predetermined polyamide resin.
<1> A commingled yarn containing:
   a continuous thermoplastic resin fiber; and
   a continuous reinforcing fiber,
   wherein
   the continuous thermoplastic resin fiber contains a polyamide resin,
   the polyamide resin includes a diamine unit and a dicarboxylic acid unit,
   70 mol% or higher of the diamine unit is derived from xylylenediamine, and
   70 mol% or higher of the dicarboxylic acid unit is derived from an α,ω-linear aliphatic dicarboxylic acid having from 11 to 20 carbon atoms.
<2> The commingled yarn according to <1>, wherein 70 mol% or higher of the dicarboxylic acid unit is derived from dodecanedioic acid and/or tetradecanedioic acid.
<3> The commingled yarn according to <1>, wherein 70 mol% or higher of the dicarboxylic acid unit is derived from dodecanedioic acid.
<4> The commingled yarn according to any one of <1> to <3>, wherein from 20 to 100 mol% of the diamine unit is derived from m-xylylenediamine, and from 80 to 0 mol% of the diamine unit is derived from p-xylylenediamine (provided that a total thereof does not exceed 100 mol%).
<5> The commingled yarn according to <1>, wherein 70 mol% or higher of the dicarboxylic acid unit is derived from dodecanedioic acid and/or tetradecanedioic acid, and
   from 20 to 100 mol% of the diamine unit is derived from m-xylylenediamine, and from 80 to 0 mol% of the diamine unit is derived from p-xylylenediamine (provided that a total thereof does not exceed 100 mol%).
<6> The commingled yarn according to any one of <1> to <5>, wherein the continuous reinforcing fiber includes at least one selected from the group consisting of a carbon fiber, a glass fiber, and an aramid fiber.
<7> The commingled yarn according to any one of <1> to <6>, wherein a number average fiber length of the continuous reinforcing fibers is more than 10 mm.
<8> The commingled yarn according to any one of <1> to <7>, wherein the continuous thermoplastic resin fiber is an unstretched fiber.
<9> The commingled yarn according to any one of <1> to <8>, wherein the commingled yarn is for tailored fiber placement processing.
<10> A woven fabric formed from the commingled yarn described in any one of <1> to <9>.
<11> A method for producing a formed article, the method including heat-processing the commingled yarn described in any one of <1> to <9>.
<12> A method for producing a formed article, the method including subjecting the commingled yarn described in any one of <1> to <9> to tailored fiber placement processing.

### Advantageous Effects of Invention

According to the present invention, it is possible to provide a commingled yarn excellent in flexibility, a woven fabric, and a method for producing a formed article.

### Brief Description of Drawings

[FIG. 1] FIG. 1 is a schematic diagram showing a state in which a commingled yarn of the present invention is stitched with a shape-retaining yarn.
[FIG. 2] FIG. 2 is an image diagram showing results of embroidery when a commingled yarn (A) of the related art and the commingled yarn (B) of the present invention are stitched.
[FIG. 3] FIG. 3 is an image diagram showing a method for measuring moldability of the present Examples.

### Description of Embodiments

Embodiments for carrying out the present invention (hereinafter referred to simply as "the present embodiment") will be described in detail below. The present embodiment described below is an example for describing the present invention, and the present invention is not limited only to the present embodiment.

In the present specification, numerical values described before and after the term "to" are respectively the lower limit value and the upper limit value of a range including the numerical values. In addition, the upper limit values and the lower limit values of the numerical values in the present specification are examples of the present embodiment, even for any combination of the upper limit value and the lower limit value.

In the present specification, various physical property values and characteristic values are those at 23°C unless otherwise noted.

When the measurement methods or the like described in the standards described in the present specification differ depending on the year, the measurement methods or the like are based on the standards as of January 1, 2024, unless otherwise noted. When the measurement methods or the like described in the standards described in the present specification are abolished as of January 1, 2024, the measurement methods or the like are based on the standards at the time of the abolishment.

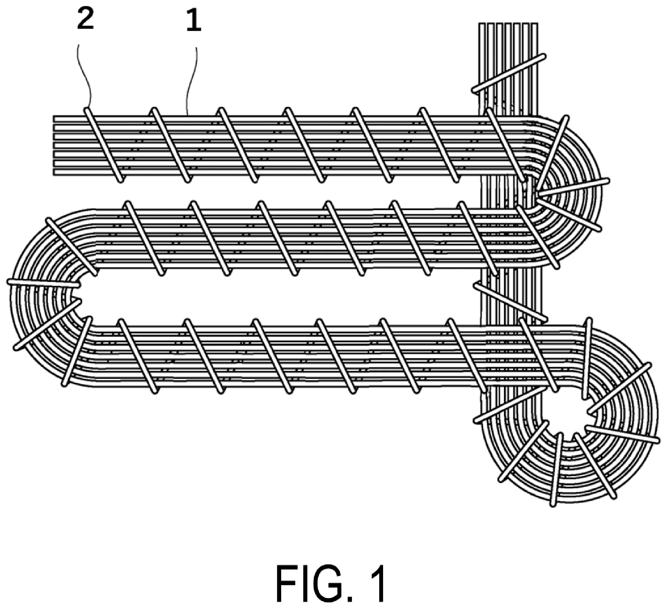

In FIGS. 1 to 3, a scale or the like is not always consistent with the actual scale or the like.

A commingled yarn of the present embodiment is characterized by including a continuous thermoplastic resin fiber and a continuous reinforcing fiber, and characterized in that the continuous thermoplastic resin fiber contains a polyamide resin, the polyamide resin includes a diamine unit and a dicarboxylic acid unit, 70 mol% or higher of the diamine unit is derived from xylylenediamine, and 70 mol% or higher of the dicarboxylic acid unit is derived from an α,ω-linear aliphatic dicarboxylic acid having from 11 to 20 carbon atoms. Such a configuration makes it possible to provide a commingled yarn excellent in flexibility.

FIG. 1 is a schematic diagram showing a state in which a commingled yarn 1 in the present embodiment is stitched with a shape-retaining yarn 2. As shown in FIG. 1, the use of the commingled yarn 1 of the present embodiment enables desired embroidery (stitching) via TFP. A stitching needle is mechanically controlled, and the shape-retaining yarn 2 stitches the commingled yarn 1, thereby retaining the commingled yarn 1 in a desired shape. Here, if the commingled yarn is hard, the commingled yarn will become twisted in the shape-retaining yarn. In the present embodiment, it has been found that, by using a predetermined polyamide resin, the commingled yarn is stitched at a desired position even when stitching is performed in a complicated shape.

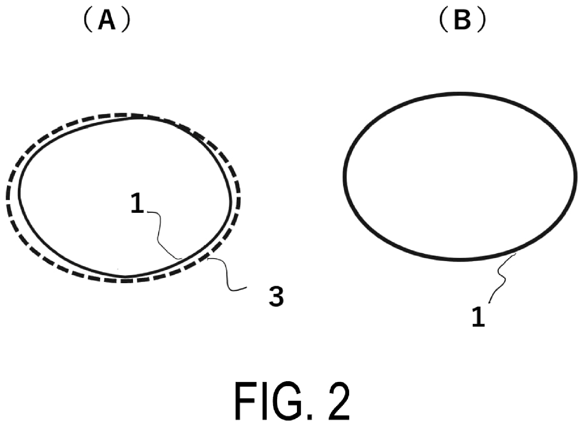

FIG. 2 is an image diagram showing results of embroidery when a commingled yarn containing a continuous thermoplastic resin fiber using a polyamide resin composed of sebacic acid and xylylenediamine, and a continuous carbon fiber (FIG. 2 (A)), and the commingled yarn of the present embodiment FIG. 2 (B) are each stitched. In FIG. 2, the shape-retaining yarn is not shown.

In FIG. 2 (A), the commingled yarn 1 containing a continuous thermoplastic resin fiber using a polyamide resin composed of sebacic acid and xylylenediamine and a continuous carbon fiber is used for stitching. In FIG. 2 (A), the commingled yarn 1 is stitched in such a manner that the yarn is deviated from a designed desired pattern 3 (a dotted line portion in FIG. 2 (A)). This is because the commingled yarn 1 shown in FIG. 2 (A) is a fine commingled yarn having excellent rigidity, but is hard due to its excellent rigidity and twisted in the shape-retaining yarn, and as a result, the commingled yarn 1 is shape-retained while being slightly deviated from the set desired pattern 3.

In contrast, as shown in FIG. 2 (B), when the commingled yarn of the present embodiment is used, the commingled yarn is flexible, and therefore arranged so as to follow the designed desired pattern, and the desired pattern is formed by the commingled yarn 1 by stitching.

Note that FIG. 2 is an image diagram for clarifying the difference between the known technique and the present embodiment, and does not necessarily show an actual stitched state. In practice, the effect obtained when using the commingled yarn of the present embodiment becomes clear, for example, in the case of stitching an elliptical pattern with a smaller curvature radius (for example, an elliptical pattern with a horizontal width of 3 cm and a vertical length of 10 cm).

The details of the present embodiment will be described below.

### <Commingled yarn>

The commingled yarn of the present embodiment is preferably a commingled yarn in which the continuous reinforcing fiber is dispersed, and the continuous reinforcing fiber and the continuous thermoplastic resin fiber are bundled (preferably in the form of a tape). When the fibers are bundled, a sizing agent or a surface treatment agent is preferably used.

In the commingled yarn of the present embodiment, the continuous thermoplastic resin fiber is preferably not impregnated into the continuous reinforcing fiber, but keeps its fiber state. In the commingled yarn of the present embodiment, a part of the continuous thermoplastic resin fiber component may be impregnated into the continuous reinforcing fiber. Specifically, in the commingled yarn of the present embodiment, a ratio of impregnation of the continuous thermoplastic resin fiber component is less than 1%, and preferably 0.5% or less. A lower limit value of the ratio of impregnation is not particularly limited and may be 0%.

### <<Method of Measuring Ratio of Impregnation>>

Cross-sections of the commingled yarns perpendicular to the longitudinal direction of the continuous reinforcing fiber are collectively cut out, and the commingled yarns are embedded in an epoxy resin. A surface corresponding to the cross-section of the commingled yarn is ground, and the cross-sectional view is photographed using an ultra-deep color 3D shape measuring microscope. The cross-sections of the commingled yarns embedded in the epoxy resin are observed with a digital microscope. In the obtained cross-sectional image, a region where the thermoplastic resin fiber is impregnated into the continuous reinforcing fiber (a region where the thermoplastic resin fiber is melted and impregnated between the continuous reinforcing fibers) is selected using image analysis software ImageJ, and an area of the region is measured. The ratio of impregnation is expressed as (region where thermoplastic resin fiber is impregnated into continuous reinforcing fiber)/(cross-sectional area) (unit: %).

For the ultra-deep color 3D shape measuring microscope, a VK-9500 (controller section)/VK-9510 (measurement section) (available from Keyence Corporation) was used.

The commingled yarn is preferably treated with a treatment agent such as a sizing agent or a surface treatment agent. Such a configuration makes it easier to bundle the fibers while increasing a degree of dispersion of the continuous reinforcing fiber in the commingled yarn. Examples of the treatment agent include an ester-based compound, an alkylene glycol-based compound, a polyolefin-based compound, and a phenyl ether-based compound. In particular, a compound having a function as a surfactant is preferable.

A proportion of the continuous reinforcing fiber in the commingled yarn is preferably 10 mass% or more, more preferably 15 mass% or more, still more preferably 20 mass% or more, further preferably 30 mass% or more, still further preferably 40 mass% or more, and particularly preferably 50 mass% or more, and can also be 55 mass% or more. An upper limit of the proportion of the continuous reinforcing fiber in the commingled yarn is preferably 90 mass% or less, more preferably 80 mass% or less, and still more preferably 70 mass% or less, and can also be 65 mass% or less.

The commingled yarn of the present embodiment may contain only one type of continuous reinforcing fiber or may contain two or more types of continuous reinforcing fibers. When two or more types are contained, the total amount is preferably in the range described above.

A proportion of the continuous thermoplastic resin fiber in the commingled yarn is preferably 10 mass% or more, more preferably 20 mass% or more, and still more preferably 30 mass% or more, and can also be 35 mass% or more. An upper limit of the proportion of the continuous thermoplastic resin fiber is preferably 90 mass% or less, more preferably 85 mass% or less, still more preferably 80 mass% or less, further preferably 70 mass% or less, still further preferably 60 mass% or less, and particularly preferably 50 mass% or less, and can also be 45 mass% or less.

The commingled yarn of the present embodiment may contain only one type of continuous thermoplastic resin fiber or may contain two or more types of continuous thermoplastic resin fibers. When two or more types are contained, the total amount is preferably in the range described above.

In the commingled yarn of the present embodiment, a total of the continuous thermoplastic resin fiber and the continuous reinforcing fiber preferably accounts for 90 mass% or more of the commingled yarn, more preferably accounts for 95 mass% or more, may account for 99 mass% or more, and is 100 mass% or less.

The degree of dispersion of the continuous reinforcing fiber in the commingled yarn is preferably from 60 to 100%, more preferably from 63 to 100%, still more preferably from 68 to 100%, and particularly preferably from 70 to 100%. Within such a range, the commingled yarn exhibits more uniform physical properties, and the appearance of the formed article is further improved. In addition, when a formed article is prepared using the commingled yarn, a formed article having more excellent mechanical properties is obtained.

### <<Method of Measuring Degree of Dispersion>>

The commingled yarn is embedded in an epoxy resin, a cross-section perpendicular to the longitudinal direction of the commingled yarn is ground, and the cross-sectional view is photographed using an ultra-deep color 3D shape measuring microscope. In the captured image, six auxiliary lines are drawn radially at equal intervals, and lengths of the continuous reinforcing fiber regions along each auxiliary line are measured as a1, a2, a3, ... ai (i = n). In addition, lengths of the continuous thermoplastic resin fiber regions on each auxiliary line are measured as b1, b2, b3, ... bi (i = m). Based on the results, the degree of dispersion is calculated by the following equation. [Num. 1] $\left[1-\left(\frac{1}{n or m}\times \frac{{\sum }_{i = 1}^{n or m} \left({a}_{i} or {b}_{i}\right)}{{\sum }_{i = 1}^{n or m} \left({a}_{i}\right) + {\sum }_{i = 1}^{n or m} \left({b}_{i}\right)}\right)\right] \times 100 \left(%\right)$

For the ultra-deep color 3D shape measuring microscope, a VK-9500 (controller section)/VK-9510 (measurement section) (available from Keyence Corporation) can be used.

The commingled yarn is typically produced by using a continuous thermoplastic resin fiber bundle and a continuous reinforcing fiber bundle.

As the continuous reinforcing fiber and/or the continuous thermoplastic resin fiber used in the commingled yarn, those surface-treated with a treatment agent are preferably used. With such a configuration, a commingled yarn in which the continuous reinforcing fiber and the continuous thermoplastic resin fiber are more uniformly dispersed is easily obtained, and the ratio of impregnation of the continuous thermoplastic resin fiber component into the continuous reinforcing fiber after molding can be improved.

For details of other commingled yarns, reference can be made to the descriptions in paragraphs [0018] to [0039] of WO 2016/159340, the contents of which are incorporated herein by reference.

### <Continuous Thermoplastic Resin Fiber>

The commingled yarn of the present embodiment contains continuous thermoplastic resin fibers. The continuous thermoplastic resin fibers refer to thermoplastic resin fibers having an average fiber length of more than 6 mm, and are preferably thermoplastic resin fibers having an average fiber length of more than 10 mm, preferably thermoplastic resin fibers having an average fiber length of more than 12 mm, more preferably thermoplastic resin fibers having an average fiber length of more than 30 mm, and still more preferably thermoplastic resin fibers having an average fiber length of more than 10 cm. The average fiber length of the continuous thermoplastic resin fibers for use in the present embodiment is not particularly limited, but is preferably 1 m or more, more preferably 100 m or more, and still more preferably 1000 m or more, and is preferably 20000 m or less, more preferably 10000 m or less, and still more preferably 7000 m or less, from the viewpoint of improving molding processability.

The polyamide resin constituting the continuous thermoplastic resin fiber includes a polyamide resin (hereinafter, sometimes referred to as "xylylenediamine-based polyamide resin") including a diamine unit and a dicarboxylic acid unit, with 70 mol% or higher of the diamine unit being derived from xylylenediamine, and 70 mol% or higher of the dicarboxylic acid unit being derived from an α,ω-linear aliphatic dicarboxylic acid having from 11 to 20 carbon atoms.

In the xylylenediamine-based polyamide resin, preferably 75 mol% or higher, more preferably 80 mol% or higher, still more preferably 90 mol% or higher, further preferably 95 mol% or higher, and particularly still further preferably 99 mol% or higher of the diamine unit is derived from a xylylenediamine (preferably p-xylylenediamine and/or m-xylylenediamine).

The xylylenediamine is preferably p-xylylenediamine and/or m-xylylenediamine. The xylylenediamine preferably includes from 0 to 100 mol% of m-xylylenediamine and from 100 to 0 mol% of p-xylylenediamine (provided that a total of the m-xylylenediamine and p-xylylenediamine does not exceed 100 mol%), and more preferably includes from 20 to 100 mol% of m-xylylenediamine and from 80 to 0 mol% of p-xylylenediamine.
In the xylylenediamine-based polyamide resin, the total of the p-xylylenediamine unit and the m-xylylenediamine unit accounts for preferably 80 mol% or higher, more preferably 85 mol% or higher, still more preferably 90 mol% or higher, further preferably 95 mol% or higher, still further preferably 98 mol% or higher, and yet still further preferably 99 mol% or higher of the diamine unit. An upper limit of the total of the p-xylylenediamine unit and the m-xylylenediamine unit is 100 mol%.

Examples of the diamine that can be used as a raw material diamine component of the xylylenediamine-based polyamide resin, other than m-xylylenediamine or p-xylylenediamine, include an aliphatic diamine, such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine, or 2,4,4-trimethylhexamethylenediamine; an alicyclic diamine, such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl) propane, bis(aminomethyl)decalin, or bis(aminomethyl)tricyclodecane; and a diamine having an aromatic ring, such as bis(4-aminophenyl)ether, p-phenylenediamine, or bis(aminomethyl)naphthalene. One of these diamines, or a mixture of two or more of these may be used.

On the other hand, preferably 75 mol% or higher, more preferably 80 mol% or higher, still more preferably 85 mol% or higher, further preferably 90 mol% or higher, still further preferably 95 mol% or higher, and particularly further preferably 99 mol% or higher of the dicarboxylic acid unit of the xylylenediamine-based polyamide resin are derived from an α,ω-linear aliphatic dicarboxylic acid having from 11 to 20 carbon atoms.

The α,ω-linear aliphatic dicarboxylic acid having from 11 to 20 carbon atoms, which is preferable to be used as a raw material dicarboxylic acid component of the xylylenediamine-based polyamide resin, is preferably an α,ω-linear aliphatic dicarboxylic acid having from 11 to 16 carbon atoms or an α,ω-linear aliphatic dicarboxylic acid having from 12 to 14 carbon atoms.

The α,ω-linear aliphatic dicarboxylic acid having from 11 to 20 carbon atoms is specifically dodecanedioic acid, tridecanedioic acid, tetradecanedioic acid, or the like, among which dodecanedioic acid and/or tetradecanedioic acid are/is preferable, and dodecanedioic acid is more preferable since the melting point of the polyamide resin falls within an appropriate range for molding processing.

Examples of the dicarboxylic acid component other than the above include α,ω-linear aliphatic dicarboxylic acids having 10 or less carbon atoms, such as adipic acid and sebacic acid; phthalic acid compounds such as isophthalic acid, terephthalic acid, and orthophthalic acid; and naphthalenedicarboxylic acid isomers such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One of these can be used, or two or more thereof can be mixed and used.

Note that the xylylenediamine-based polyamide resin is composed of the diamine unit and the dicarboxylic acid unit as main components, but structural units other than these are not entirely excluded. Of course, the xylylenediamine-based polyamide resin may contain a structural unit derived from a lactam such as ε-caprolactam or laurolactam, or from an aliphatic aminocarboxylic acid such as aminocaproic acid or aminoundecanoic acid. Here, the main component means, of the structural units constituting the xylylenediamine-based polyamide resin, a component having the largest total number of the diamine units and the dicarboxylic acid units among all the structural units. In the present embodiment, the total of the diamine units and the dicarboxylic acid units in the xylylenediamine-based polyamide resin preferably accounts for 90 mass% or more, more preferably 95 mass% or more, still more preferably 97 mass% or more, further preferably 99 mass% or more, of all the structural units.

The xylylenediamine-based polyamide resin preferably uses a polyamide resin (biomass polyamide resin) produced by using a biomass raw material. Use of a biomass polyamide resin can reduce environmental load.

A raw material monomer that has been mass balance certified (ISCC PLUS) can also be used. The mass balance certification means that degrees of usage of reusable raw materials and raw biomaterials for each factory or production facility and degrees of production and shipment of products are quantified and certified together with quality.

A melting point of the xylylenediamine-based polyamide resin is preferably 150°C or higher, more preferably 160°C or higher, still more preferably 170°C or higher, and further preferably 180°C or higher, and is preferably 300°C or lower, more preferably 290°C or lower, still more preferably 280°C or lower, and further preferably 275°C or lower. The melting point is measured in accordance with descriptions in the Examples described below.

In the case where the commingled yarn of the present embodiment contains two or more types of xylylenediamine-based polyamide resins, a weighted average value of each polyamide resin is used.

A lower limit of a number average molecular weight (Mn) of the xylylenediamine-based polyamide resin is preferably 6000 or more, more preferably 8000 or more, and further preferably 10000 or more, and is preferably 100000 or less, and more preferably 50000 or less. The polyamide with a number average molecular weight in such a range provides better thermal resistance, elastic modulus, dimensional stability, and moldability.

The number average molecular weight is a value measured by gel permeation chromatography (GPC) and converted calibrated with polystyrene. More specifically, the number average molecular weight can be measured in accordance with the description in paragraph [0047] of JP 2018-165298 A, the content of which is incorporated herein.

In the xylylenediamine-based polyamide resin used in the present embodiment, a content rate of a compound with a molecular weight of 310 or more and 1000 or less is preferably less than 0.1 mass% and more than 1.5 mass%.

In the xylylenediamine-based polyamide resin used in the present embodiment, a content rate of a compound with a molecular weight of less than 310 is preferably more than 0.1 mass%.

The continuous thermoplastic resin fiber may contain a polyamide resin other than the xylylenediamine-based polyamide resin. Examples of the polyamide resin other than the xylylenediamine-based polyamide resin include a semi-aromatic polyamide resin other than the aliphatic polyamide resin and the xylylenediamine-based polyamide resin.

Examples of the aliphatic polyamide resin include polyamide 4, polyamide 46, polyamide 6, polyamide 66, polyamide 666, polyamide 610, polyamide 11, and polyamide 12.

Examples of the semi-aromatic polyamide resin include terephthalic acid-based polyamide resins (polyamide 6T, polyamide 9T, and polyamide 10T).

When the continuous thermoplastic resin fiber contains a polyamide resin other than the xylylenediamine-based polyamide resin, a content thereof is preferably less than 10 mass%, more preferably less than 5 mass%, still more preferably less than 3 mass%, and further preferably less than 1 mass% of a content of the xylylenediamine-based polyamide resin.

The continuous thermoplastic resin fiber may be surface-treated with a surface treatment agent.

The continuous thermoplastic resin fiber may be stretched or may not be stretched. In the present embodiment, the continuous thermoplastic resin fiber is preferably not stretched. A commingled yarn more excellent in flexibility can be obtained due to the continuous thermoplastic resin fiber being not stretched.

The continuous thermoplastic resin fiber may or may not contain an additional component other than the polyamide resin.

As the additional component, for example, additives, such as a thermoplastic resin other than the polyamide resin, an antioxidant, a stabilizer such as a thermal stabilizer, a hydrolysis-resistance improving agent, a weather resistant stabilizer, a matting agent, an ultraviolet absorber, a nucleating agent, a plasticizer, a dispersant, a flame retardant, an antistatic agent, an anticolorant, an anti-gelling agent, a colorant, and a release agent can be added. For details of these, reference can be made to the descriptions in paragraphs [0130] to [0155] of JP 4894982 B and the descriptions in paragraphs [0047] to [0103] of WO 2021/241471, the contents of which are incorporated herein by reference.

A content of the additional component other than the polyamide resin contained in the continuous thermoplastic resin fiber is preferably less than 10 mass%, more preferably less than 5 mass%, still more preferably less than 3 mass%, and further preferably less than 1 mass% of the commingled yarn.

The continuous thermoplastic resin fiber preferably does not contain cobalt stearate, and further, does not contain a cobalt salt.

### <Continuous Reinforcing Fiber>

The commingled yarn of the present embodiment contains a continuous reinforcing fiber. The continuous reinforcing fibers refer to reinforcing fibers having an average fiber length of more than 6 mm, preferably having an average fiber length of more than 10 mm, more preferably having an average fiber length of more than 12 mm, still more preferably having an average fiber length of more than 30 mm, and further preferably having an average fiber length of more than 10 cm. The average fiber length of the continuous reinforcing fibers for use in the present embodiment is not particularly limited, but is preferably 1 m or more, more preferably 100 m or more, still more preferably 1000 m or more, and is preferably 20000 m or less, more preferably 10000 m or less, still more preferably 7000 m or less, from the viewpoint of improving molding processability.

Examples of the continuous reinforcing fiber include inorganic fibers, such as glass fibers, carbon fibers, metal fibers, boron fibers, basalt fibers, and ceramic fibers; and organic fibers, such as aramid fibers, polyoxymethylene fibers, aromatic polyamide fibers, polyparaphenylene benzobisoxazole fibers, and ultra-high molecular weight polyethylene fibers. Among these, the continuous reinforcing fiber preferably includes at least one selected from the group consisting of a carbon fiber, a glass fiber, and an aramid fiber, more preferably a carbon fiber and/or a glass fiber, and still more preferably a carbon fiber.

Examples of the carbon fiber include polyacrylonitrile-based carbon fibers and pitch-based carbon fibers.

As the glass fiber, a fiber obtained by melt spinning glass such as E glass, C glass, A glass, S glass, or alkali-resistant glass, which is ordinarily supplied, is used.

The continuous reinforcing fiber may be surface-treated with a surface treatment agent.

The cross section of the continuous reinforcing fiber may be either circular or non-circular.

For the continuous carbon fiber, reference can be made to the description in paragraph [0074] of JP 7398028 B, the contents of which are incorporated in the present specification by reference, in addition to the above.

The continuous reinforcing fiber in the present embodiment is usually oriented in one direction.

When the continuous reinforcing fiber is a carbon fiber, a tensile strength thereof is preferably 1500 MPa or more, more preferably 2500 MPa or more, and still more preferably 3500 MPa or more. The upper limit is not specifically limited but is practically 8000 MPa or less. For the glass fiber, the tensile strength is preferably 800 MPa or more, more preferably 1800 MPa or more, and still more preferably 2800 MPa or more. The upper limit is not specifically limited but is practically 5000 MPa or less.

### <Additional Component>

The commingled yarn of the present embodiment may contain an additional component other than the continuous thermoplastic resin fiber and the continuous reinforcing fiber.

As the additional component, for example, additives, such as a thermoplastic resin other than the polyamide resin, a filler other than the continuous reinforcing fiber, an antioxidant, a stabilizer such as a thermal stabilizer, a hydrolysis-resistance improving agent, a weather resistant stabilizer, a matting agent, an ultraviolet absorber, a nucleating agent, a plasticizer, a dispersant, a flame retardant, an antistatic agent, an anticolorant, an anti-gelling agent, a colorant, and a release agent can be added. For details of these, reference can be made to the descriptions in paragraphs [0130] to [0155] of JP 4894982 B and the descriptions in paragraphs [0047] to [0103] of WO 2021/241471, the contents of which are incorporated herein by reference.

A content of the additional component is preferably less than 10 mass%, more preferably less than 5 mass%, still more preferably less than 3 mass%, and further preferably less than 1 mass% of the commingled yarn.

The commingled yarn of the present embodiment is typically produced by using a continuous thermoplastic resin fiber bundle and a continuous reinforcing fiber bundle. As the continuous reinforcing fiber and/or the continuous thermoplastic resin fiber used in the commingled yarn, those surface-treated with a treatment agent are preferably used. With such a configuration, a commingled yarn in which the continuous reinforcing fiber and the continuous thermoplastic resin fiber are more uniformly dispersed is easily obtained, and the ratio of impregnation of the continuous thermoplastic resin fiber component into the continuous reinforcing fiber after molding can be improved. For details of other commingled yarns and methods for producing the same, reference can be made to the descriptions in paragraphs [0018] and [0039] of WO 2016/159340 and paragraph [0051] of WO 2020/063342 the contents of which are incorporated in the present specification by reference.

The commingled yarn of the present embodiment typically contains from 2 to 1000 (preferably from 10 to 100) continuous thermoplastic resin fibers and from 2 to 1000 (preferably from 10 to 100) continuous reinforcing fibers per yarn.

The commingled yarn of the present embodiment can be heat-processed to produce a formed article. The formed article is not particularly limited, and is widely used in applications, such as components for transportation equipment components, such as those of automobiles and aircraft; general mechanical components; precision mechanical components; electronic and electrical equipment components; OA equipment components; building materials and housing-related components; medical devices; leisure sporting goods; playing tools; medical supplies; articles for daily use, such as food packaging films, and defense and aerospace products. In particular, the formed article is suitably used as molded materials for medical equipment (such as long leg brace), window frames for automobiles, trains, and ships, frames for goggle part of helmets, frames for glasses, safety shoes, and the like. In particular, the composite material of the present invention has a great value when used as a material for forming medical equipment and a secondary structural component for automobiles. The present invention is also suitable for manufacturing a formed article having a concave portion or a convex portion.

The commingled yarn of the present embodiment is preferably used for tailored fiber placement processing (for TFP). The commingled yarn of the present embodiment is preferably used as a yarn for use in applications including filature, such as braiding machines, knitting machines, and weaving machines.

That is, a tailored fiber placement processed product using the commingled yarn of the present embodiment, a woven fabric formed from the commingled yarn of the present embodiment, a knitted fabric formed from the commingled yarn of the present embodiment, and the like are indicated as examples. Examples of the application including filature in the present embodiment include a braid and a twisted string.

Referring back to FIG. 1, a case where the commingled yarn of the present embodiment is subjected to tailored fiber placement processing will be described. FIG. 1 shows an example of a case where the commingled yarn of the present embodiment is subjected to tailored fiber placement processing, wherein 1 denotes the commingled yarn of the present embodiment, and 2 denotes a shape-retaining yarn. In the TFP processing, the commingled yarn 1 is preferably disposed so as to conform to the shape of the formed article and stitched with the shape-retaining yarn 2. The shape-retaining yarn 2 is usually a continuous thermoplastic resin fiber, and a preferred range and the like thereof are the same as those of the continuous thermoplastic resin fiber described above. As illustrated in FIG. 1, the commingled yarn of the present embodiment can be preferably used for a formed article having, for example, two or more folded portions, preferably three or more folded portions. In particular, as illustrated in FIG. 1, the commingled yarn is preferably used for the production of a formed article having a folded portion having a folding angle of 90°C or higher.

The formed article of the present embodiment is molded by heat-processing the commingled yarn.

The formed article of the present embodiment is also molded by heat-processing a tailored fiber placement processed product of the commingled yarn.

### Examples

Hereinafter, the present invention will be described more specifically with reference to Examples. Materials, amounts used, proportions, processing details, processing procedures, and the like described in the following Examples can be appropriately changed without departing from the spirit of the present invention. Thus, the scope of the present invention is not limited to the specific examples described below.

When it is difficult to obtain a measuring instrument or the like used in Examples because of discontinuation or the like, another instrument with equivalent performance can be used for the measurements.

### <Raw Material>

Continuous carbon fiber: PYROFIL (trade name) available from TR3523, Mitsubishi Chemical Corporation
MP12 (30): A polyamide resin synthesized according to Synthesis Example 1 described below.
MP12 (40): A polyamide resin synthesized according to Synthesis Example 2 described below.
MP14 (30): A polyamide resin synthesized according to Synthesis Example 3 described below.
MXD12: A polyamide resin synthesized according to Synthesis Example 4 described below.
PXD12: A polyamide resin synthesized according to Synthesis Example 5 described below.
MP10 (30): A polyamide resin synthesized according to Synthesis Example 6 described below.
PXD10: A polyamide resin synthesized according to Synthesis Example 7 described below.

### <Synthesis Example 1: Synthesis of MP12 (30)>

Dodecanedioic acid was placed in a jacketed reactor equipped with an agitator, a partial condenser, a cooler, a thermometer, a dropping funnel, and a nitrogen gas introduction tube, sufficiently purged with nitrogen, heated and melted at 180°C, and then the temperature was raised to 290°C while gradually dropping a mixed amine of m-xylylenediamine and p-xylylenediamine (70:30) (MPXDA available from MITSUBISHI GAS CHEMICAL COMPANY, INC.) so that the molar ratio with dodecanedioic acid was 1:1 while stirring the content. After completion of the dropwise addition, the liquid temperature of 290°C was maintained to continue the reaction for 10 minutes. Thereafter, the internal pressure of the reaction system was continuously reduced to 600 Torr over 10 minutes, and then the reaction was continued for 20 minutes. During this, the reaction temperature was continuously raised to 300°C. After completion of the reaction, through application of a pressure of 0.3 MPa using a nitrogen gas in the reactor, the polymer was taken out as a strand from a nozzle at a lower part of the polymerization tank and cooled with water, and the strand was then pelletized with a pelletizer to obtain a pellet.

### <Synthesis Example 2: Synthesis of MP12 (40)>

Dodecanedioic acid was placed in a jacketed reactor equipped with an agitator, a partial condenser, a cooler, a thermometer, a dropping funnel, and a nitrogen gas introduction tube, sufficiently purged with nitrogen, heated and melted at 180°C, and then the temperature was raised to 290°C while gradually dropping a mixed amine of m-xylylenediamine and p-xylylenediamine (60:40) (MXDA available from MITSUBISHI GAS CHEMICAL COMPANY, INC., PXDA available from Showa Denko K. K.) so that the molar ratio with dodecanedioic acid was 1:1 while stirring the content. After completion of the dropwise addition, the liquid temperature of 290°C was maintained to continue the reaction for 10 minutes. Thereafter, the internal pressure of the reaction system was continuously reduced to 600 Torr over 10 minutes, and then the reaction was continued for 20 minutes. During this, the reaction temperature was continuously raised to 300°C. After completion of the reaction, through application of a pressure of 0.3 MPa using a nitrogen gas in the reactor, the polymer was taken out as a strand from a nozzle at a lower part of the polymerization tank and cooled with water, and the strand was then pelletized with a pelletizer to obtain a pellet.

### <Synthesis Example 3: Synthesis of MP14 (30)>

In a jacketed reactor equipped with an agitator, a partial condenser, a cooler, a thermometer, a dropping funnel, and a nitrogen gas introduction tube, tetradecanedioic acid was placed, then the reactor was sufficiently purged with nitrogen and the temperature was raised to 180°C under a small amount of nitrogen gas stream, and thus the tetradecanedioic acid was dissolved to form a uniformly fluidized state. To this, a mixed amine of m-xylylenediamine and p-xylylenediamine (70:30) (MXDA available from MITSUBISHI GAS CHEMICAL COMPANY, INC., PXDA available from Showa Denko K. K.) was gradually added dropwise over 160 minutes so that the molar ratio with tetradodecanedioic acid was 1:1. During this, the internal pressure of the reaction system was at normal pressure, and the internal temperature was continuously raised to 240°C. The water that distilled out along with the dropwise addition of p/m-xylylenediamine was removed from the system through the partial condenser and the cooler. After completion of the dropwise addition of p/m-xylylenediamine, the liquid temperature of 240°C was maintained to continue the reaction for 10 minutes. Thereafter, the internal pressure of the reaction system was continuously reduced to 600 Torr over 10 minutes, and then the reaction was continued for 20 minutes. During this, the reaction temperature was continuously raised to 250°C. After completion of the reaction, by application of a pressure of 0.3 MPa using a nitrogen gas in the reactor, the polymer was taken out as a strand from a nozzle at a bottom part of the polymerization tank and cooled with water. Then, the strand was cut into a pellet shape, and thus pellets of a melt polymerization product were obtained.

### <Synthesis Example 4: Synthesis of MXD12>

Dodecanedioic acid was placed in a jacketed reactor equipped with an agitator, a partial condenser, a cooler, a thermometer, a dropping funnel, and a nitrogen gas introduction tube, sufficiently purged with nitrogen, heated and melted at 180°C, and then the temperature was raised to 290°C while gradually dropping m-xylylenediamine (MXDA available from MITSUBISHI GAS CHEMICAL COMPANY, INC.) so that the molar ratio with dodecanedioic acid was 1:1 while stirring the content. The liquid temperature of 290°C was maintained to continue the reaction for 10 minutes. Thereafter, the internal pressure of the reaction system was continuously reduced to 600 Torr over 10 minutes, and then the reaction was continued for 20 minutes. During this, the reaction temperature was continuously raised to 300°C. After completion of the reaction, through application of a pressure of 0.3 MPa using a nitrogen gas in the reactor, the polymer was taken out as a strand from a nozzle at a lower part of the polymerization tank and cooled with water, and the strand was then pelletized with a pelletizer to obtain a pellet.

### <Synthesis Example 5: Synthesis of PXD12>

Dodecanedioic acid was placed in a jacketed reactor equipped with an agitator, a partial condenser, a cooler, a thermometer, a dropping funnel, and a nitrogen gas introduction tube, sufficiently purged with nitrogen, heated and melted at 180°C, and then the temperature was raised to 290°C while gradually dropping p-xylylenediamine (PXDA available from Showa Denko K. K.) so that the molar ratio with dodecanedioic acid was 1:1 while stirring the content. The temperature was raised to 290°C. The liquid temperature of 290°C was maintained to continue the reaction for 10 minutes. Thereafter, the internal pressure of the reaction system was continuously reduced to 600 Torr over 10 minutes, and then the reaction was continued for 20 minutes. During this, the reaction temperature was continuously raised to 300°C. After completion of the reaction, through application of a pressure of 0.2 MPa using a nitrogen gas in the reactor, the polymer was taken out as a strand from a nozzle at a lower part of the polymerization tank and cooled with water, and the strand was then pelletized with a pelletizer to obtain a pellet.

### <Synthesis Example 6: Synthesis of MP10 (30)>

Sebacic acid was placed in a jacketed reactor equipped with an agitator, a partial condenser, a cooler, a thermometer, a dropping funnel, and a nitrogen gas introduction tube, sufficiently purged with nitrogen, heated and melted at 170°C, and then the temperature was raised to 240°C while gradually dropping a mixed amine of m-xylylenediamine and p-xylylenediamine (70:30) (MPXDA available from MITSUBISHI GAS CHEMICAL COMPANY, INC.) so that the molar ratio with sebacic acid was 1:1 while stirring the content. After the completion of dropwise addition, the temperature was increased to 260°C, and the reaction was continued for 20 minutes. Thereafter, the internal pressure of the reaction system was continuously reduced to 0.08 MPa, and then the reaction was continued. After completion of the reaction, through application of a pressure of 0.2 MPa using a nitrogen gas in the reactor, the polymer was taken out as a strand from a nozzle at a lower part of the polymerization tank and cooled with water, and the strand was then pelletized with a pelletizer to obtain a pellet.

### <Synthesis Example 7: Synthesis of PXD10>

In a jacketed reactor equipped with an agitator, a partial condenser, a cooler, a thermometer, a dropping funnel, and a nitrogen gas introduction tube, sebacic acid was placed, inside of the reactor was sufficiently purged with nitrogen, and the sebacic acid was heated and melted at 170°C. Then, while the contents were agitated, p-xylylenediamine (PXDA, available from Showa Denko K.K.) was gradually added dropwise so that the molar ratio with the sebacic acid became 1:1, the temperature was increased to 240°C. After the completion of dropwise addition, the temperature was increased to 260°C, and the reaction was continued for 20 minutes. Thereafter, the internal pressure of the reaction system was continuously reduced to 0.08 MPa, and then the reaction was continued. After completion of the reaction, through application of a pressure of 0.2 MPa using a nitrogen gas in the reactor, the polymer was taken out as a strand from a nozzle at a lower part of the polymerization tank and cooled with water, and the strand was then pelletized with a pelletizer to obtain a pellet.

### <Melting Point of Polyamide Resin>

The melting point (Tm) of the polyamide resin was measured through differential scanning calorimetry (DSC) in accordance with ISO 11357, unless otherwise noted.

Specifically, a differential scanning calorimeter was used, and the resin was placed in a measuring pan of the differential scanning calorimeter, and subjected to a pretreatment of heating to a temperature exceeding the melting point at a temperature increasing rate of 10°C/min under a nitrogen atmosphere and then performing rapid cooling, thereafter the measurement was performed. As the measurement conditions, the temperature was increased to 280°C at a temperature increase rate of 10°C/min, and then maintained at 280°C for 5 minutes, after which the temperature was reduced to 100°C at a temperature decrease rate of -5°C/min, and the measurement was then performed to determine the melting point (Tm).

The differential scanning calorimeter used was "DSC-60" available from Shimadzu Corporation.

The melting points of the polyamide resins used in Examples and Comparative Examples are shown in Table 1.

### <Production of Continuous Thermoplastic Resin Fiber>

Each of the thermoplastic resins shown in Table 1 was melt-extruded using a single-screw extruder having a 30-mm diameter screw, extruded into a strand form from a 60-hole die, and stretched while being wound with a roll, and 800 m of a fiber bundle of a continuous thermoplastic resin was wound into a wound body. The melting temperature was set at the melting point of the continuous thermoplastic resin + 15°C.

### Example 1

### <Method for Producing Commingled yarn>

Respective fibers were drawn out from a wound body of continuous thermoplastic resin fibers having a length of 1 m or more, and from a wound body of continuous carbon fibers having a length of 1 m or more, and the fibers were opened by air blowing while passing through a plurality of guides. While being opened, the continuous thermoplastic resin fiber and the continuous carbon fiber were bundled into one, and the bundle was further subjected to air blowing while being passed through a plurality of guides to increase the uniformity of the bundle.

The resulting commingled yarn had a fineness of about 13000 dtex, a fiber count of about 13500 f, a volume ratio of the continuous thermoplastic resin fiber to the continuous carbon fiber of 1:1, and a proportion of the continuous carbon fiber of about 61 mass%.

### <TFP Performance>

Using a composite fiber sewing machine, TCWM-101, available from Tajima Industries Ltd., and the commingled yarn obtained above, an ellipse with a horizontal width of 3 cm and a vertical length of 10 cm was drawn on a film (thickness: 50 µm) formed from MP10 (30) obtained in Synthesis Example 6. The area of a portion deviated from the desired pattern was measured, and the proportion (unit: %) thereof to the area of the ellipse with a horizontal width of 3 cm and a vertical length of 10 cm was calculated. Evaluation was made as follows:
A: Deviation from the desired pattern was 0.5% or less (for example, the pattern was deviated inward from the desired pattern in a range of 0.5% or less)
B: Deviation from the desired pattern was more than 0.5% and 1% or less
C: Deviation from the desired pattern was more than 1% and 3% or less
D: Deviation from the desired pattern was more than 3%

### <Moldability>

The commingled yarn obtained above was used to produce a twill fabric having a basis weight of 300 GSM (Gram per Square Meater) and a size of (70 cm × 70 cm square).

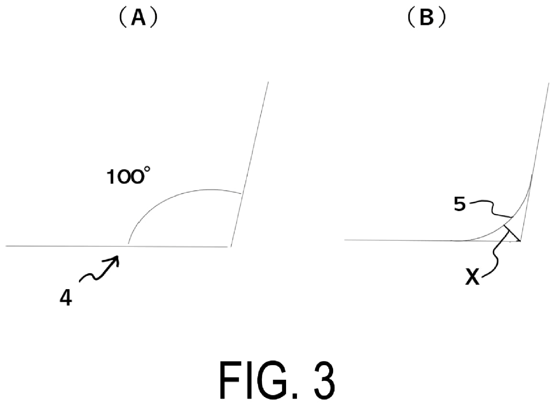

The 300-gsm twill fabric 5 was shaped at room temperature in a mold 4 having an inclination of 100° as shown in FIG. 3 (A), and a distance X by which the twill fabric 5 returned from a corner was measured after 1 minute as shown in FIG. 3 (B). The measurement was performed at 23°C.
A: 2 mm or less
B: More than 2 mm and 4 mm or less
C: More than 4 mm

### Examples 2 to 5 and Comparative Examples 1 and 2

Changes from Example 1 were made as shown in Table 1 below, and others were performed in the same manner.

**[Table 1]**

| | Example 1 | Example 2 | Example 3 | Example 4 | Example 5 | Comparative Example 1 | Comparative Example 2 |
|---|---|---|---|---|---|---|---|
| Type of resin fiber | MP12 (30) | MP12 (40) | MP14 (30) | MXD12 | PXD12 | MP10 (30) | PXD10 |
| Melting point (°C) of resin | 206 | 223 | 200 | 186 | 269 | 215 | 290 |
| TFP performance | A | A | A | B | B | C | C |
| Moldability | A | A | A | A | A | B | B |

In Table 1, the type of resin fiber indicates the type of thermoplastic resin constituting the continuous thermoplastic resin fiber.

In Table 1, the melting point of resin indicates the melting point of the thermoplastic resin constituting the continuous thermoplastic resin fiber.

The obtained commingled yarns all had a ratio of impregnation of 35% or less and a degree of dispersion of 60% or more.

As is clear from the above results, the commingled yarns of the present invention were excellent in flexibility to an extent that more precise TFP processing was possible (Examples 1 to 5). The commingled yarns of the present invention were also

### excellent in moldability.

In contrast, the commingled yarns of the Comparative Examples were excellent in TFP performance and moldability, but were inferior to the commingled yarns of the present invention (Comparative Examples 1 and 2).

### Reference Signs List

- 1: Commingled yarn
- 2: Shape-retaining yarn
- 3: Desired pattern
- 4: Mold
- 5: Twill fabric

## Claims

1. A commingled yarn comprising:
a continuous thermoplastic resin fiber; and
a continuous reinforcing fiber,
wherein
the continuous thermoplastic resin fiber comprises a polyamide resin,
the polyamide resin comprises a diamine unit and a dicarboxylic acid unit,
70 mol% or higher of the diamine unit is derived from xylylenediamine, and
70 mol% or higher of the dicarboxylic acid unit is derived from an α,ω-linear aliphatic dicarboxylic acid having from 11 to 20 carbon atoms.

2. The commingled yarn according to claim 1, wherein 70 mol% or higher of the dicarboxylic acid unit is derived from dodecanedioic acid and/or tetradecanedioic acid.

3. The commingled yarn according to claim 1, wherein 70 mol% or higher of the dicarboxylic acid unit is derived from dodecanedioic acid.

4. The commingled yarn according to any one of claims 1 to 3, wherein from 20 to 100 mol% of the diamine unit is derived from m-xylylenediamine, and from 80 to 0 mol% of the diamine unit is derived from p-xylylenediamine (provided that a total thereof does not exceed 100 mol%).

5. The commingled yarn according to claim 1, wherein 70 mol% or higher of the dicarboxylic acid unit is derived from dodecanedioic acid and/or tetradecanedioic acid, and
from 20 to 100 mol% of the diamine unit is derived from m-xylylenediamine, and from 80 to 0 mol% of the diamine unit is derived from p-xylylenediamine (provided that a total thereof does not exceed 100 mol%).

6. The commingled yarn according to any one of claims 1 to 5, wherein the continuous reinforcing fiber comprises at least one selected from the group consisting of a carbon fiber, a glass fiber, and an aramid fiber.

7. The commingled yarn according to any one of claims 1 to 6, wherein a number average fiber length of the continuous reinforcing fibers is more than 10 mm.

8. The commingled yarn according to any one of claims 1 to 7, wherein the continuous thermoplastic resin fiber is an unstretched fiber.

9. The commingled yarn according to any one of claims 1 to 8, wherein the commingled yarn is for tailored fiber placement processing.

10. A woven fabric formed from the commingled yarn described in any one of claims 1 to 9.

11. A method for producing a formed article, the method comprising heat-processing the commingled yarn described in any one of claims 1 to 9.

12. A method for producing a formed article, the method comprising subjecting the commingled yarn described in any one of claims 1 to 9 to tailored fiber placement processing.
